# EUROPEAN PATENT SPECIFICATION

(11) **EP 4 061 024 B1**
(45) Date of publication and mention of the grant of the patent: **22.11.2023**
(21) Application number: 19958664.5
(22) Date of filing: 31.12.2019
(51) Int. Cl.: H04W 4/40, H04W 72/04, H04W 28/02, H04W 92/18

(54) **D2D COMMUNICATION METHOD AND APPARATUS**
D2D-KOMMUNIKATIONSVERFAHREN UND -GERÄT
PROCÉDÉ ET APPAREIL DE COMMUNICATION D2D

(43) Date of publication of application: 21.09.2022
(73) Proprietor: Huawei Technologies Co., Ltd., Shenzhen, Guangdong 518129 (CN)
(72) Inventor: XU, Shengfeng, Shenzhen, Guangdong 518129 (CN); YANG, Yanmei, Shenzhen, Guangdong 518129 (CN); YING, Jiangwei, Shenzhen, Guangdong 518129 (CN); LI, Meng, Shenzhen, Guangdong 518129 (CN)
(74) Representative: Gill Jennings & Every LLP
(86) International application number: PCT/CN2019/130943
(87) International publication number: WO 2021/134701

(56) References cited:
- WO-A1-2017/135126
- WO-A1-2019/221826
- CN-A- 106 060 900
- CN-A- 109 040 322
- US-A1- 2018 054 237
- US-A1- 2019 313 221

## Description

### TECHNICAL FIELD

Embodiments of this application relate to the field of communication technologies, and in particular, to a device-to-device (device-to-device, D2D) communication method, apparatus, and computer-readable storage medium.

### BACKGROUND

With rapid development of communication and widespread use of video chat services, virtual reality (virtual reality, VR) services, augmented reality (Augmented Reality, AR) services, and other types of services, users have increasingly high bandwidth requirements. To meet the bandwidth requirements of the users, D2D communication is proposed. D2D communication may allow user equipments (user equipments, UEs) to communicate with each other through a proximity communication 5 (Proximity Communication 5, PC5) interface, to transmit different types of D2D service applications by sharing a physical transmission resource.

However, different D2D service applications have different quality of service (quality of service, QoS) requirements. When D2D communication devices share a physical transmission resource to transmit different D2D service applications, because physical transmission resources in a physical transmission resource pool are limited, quality of service that can be achieved for a D2D service application is limited. This is difficult to meet QoS requirements of different D2D service applications.

WO 2019/221826 discloses a user equipment (UE) that may determine a service type to be used by the UE for one or more device-to-device (D2D) communications on a sidelink interface; determine a slice identifier based at least in part on the service type, wherein the slice identifier corresponds to a resource allocation to be used for the one or more D2D communications, and transmit an indication of the slice identifier.

### SUMMARY

This application provides a D2D communication method, apparatus, and computer-readable storage medium, to resolve a problem that quality of service requirements of different service applications cannot be met in existing D2D communication. The invention is defined by the appended claims. Embodiments not falling within the scope of the claims are for illustration only.

### BRIEF DESCRIPTION OF DRAWINGS

FIG. 1a is a simplified schematic diagram of a communication system according to an embodiment of this application;
FIG. 1b is a simplified schematic diagram showing that terminals communicate with each other using a sidelink slice according to an embodiment of this application;
FIG. 2 is a schematic diagram of composition of a communication apparatus according to an embodiment of this application;
FIG. 3 is a schematic diagram of a D2D communication method according to an embodiment of this application;
FIG. 4 is a schematic diagram of a method for obtaining a correspondence between identification information of a D2D service application and identification information of a sidelink slice according to an embodiment of this application;
FIG. 5 is a schematic diagram of a communication method for finding a second terminal according to an embodiment of this application;
FIG. 6 is a schematic diagram of a communication method for determining to allow a first terminal to use a sidelink slice according to an embodiment of this application;
FIG. 7 is a schematic diagram of a method for establishing a sidelink to a second terminal by a first terminal according to an embodiment of this application;
FIG. 8 is a schematic diagram of a method for obtaining, by a first terminal, a physical transmission resource corresponding to a sidelink slice according to an embodiment of this application;
FIG. 9 is a schematic diagram of a method for obtaining, by a first terminal, a physical transmission resource corresponding to a sidelink slice according to an embodiment of this application;
FIG. 10 is a schematic diagram of a method for obtaining, by a first terminal, a physical transmission resource corresponding to a sidelink slice according to an embodiment of this application;
FIG. 11 is a schematic diagram of composition of a communication apparatus according to an embodiment of this application;
FIG. 12 is a schematic diagram of composition of a communication apparatus according to an embodiment of this application; and
FIG. 13 is a schematic diagram of composition of a communication apparatus according to an embodiment of this application.

### DESCRIPTION OF EMBODIMENTS

The following describes implementations of embodiments of this application in detail with reference to accompanying drawings in this specification.

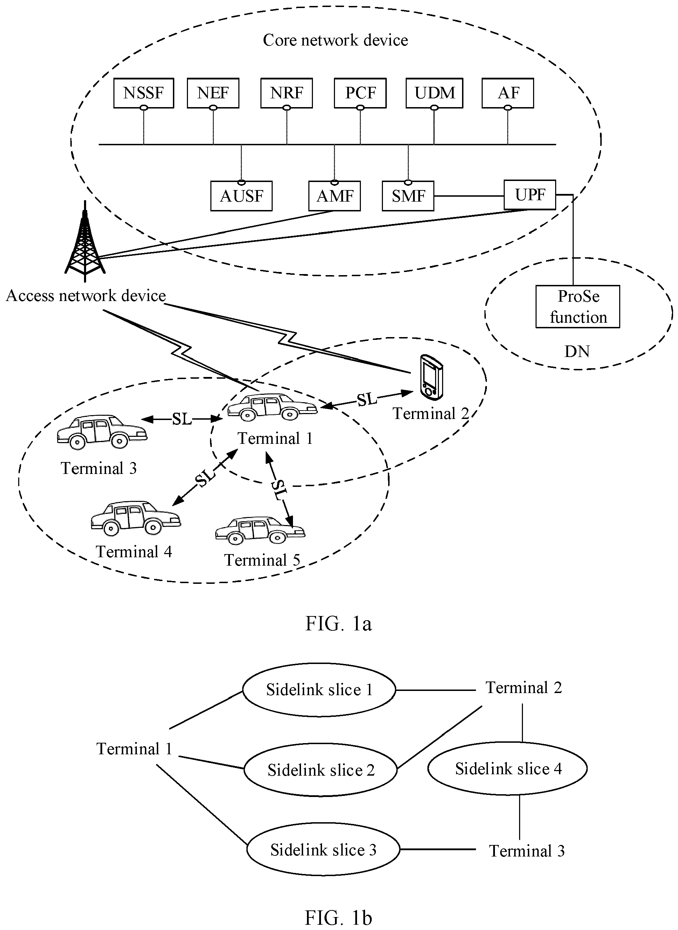

The D2D communication method provided in embodiments of this application may be applied to any communication system that supports D2D communication, or may be applied to any communication system that supports vehicle-to-everything (vehicle-to-everything, V2X) communication. The communication system may be a 3rd Generation Partnership Project (3rd generation partnership project, 3GPP) communication system, for example, a long term evolution (long term evolution, LTE) system, may be a 5th generation (5th generation, 5G) mobile communication system, a new radio (new radio, NR) system, an NR V2X system, or another next generation communication system, or may be a non-3GPP communication system. This is not limited. FIG. 1a is used as an example below to describe the D2D communication method provided in embodiments of this application.

FIG. 1a is a schematic diagram of a communication system according to an embodiment of this application. As shown in FIG. 1a, the communication system may include a plurality of terminals, an access network device, a core network device, and a data network (Data Network, DN). The terminal may be located within cell coverage of the access network device, or may be located outside the cell coverage of the access network device. The terminal may perform air interface communication with the access network device on an uplink (uplink, UL). The terminal sends data to the access network device on the UL, the access network device forwards the received data to the core network device, and the core network device processes the data, and delivers processed data to the terminal via an access network device. For example, the terminal sends uplink data to the access network device on the UL by using a physical uplink shared channel (physical uplink shared channel, PUSCH), the access network device forwards the received uplink data to the core network device, and the core network device processes the uplink data, and delivers processed uplink data to the terminal via an access network device. The access network device that forwards the uplink data from the terminal to the core network device and an access network device that forwards downlink data from the core network device to the terminal may be a same access network device, or may be different access network devices, which may be specifically determined by a server.

Alternatively, the terminal may communicate with the core network device through a specific interface. For example, the terminal may communicate with an access and mobility management function (access and mobility management function, AMF) network element in the core network device through an N1 interface.

Alternatively, the terminal may perform sidelink communication or D2D communication with another terminal on a sidelink (sidelink, SL), and send data to the another terminal on the SL. For example, the terminal sends sidelink data to the another terminal on the SL by using a physical sidelink shared channel (physical sidelink share channel, PSSCH), and sends sidelink feedback control information (sidelink feedback control information, SFCI) corresponding to the received sidelink data to another terminal on the SL by using a physical sidelink feedback channel (physical sidelink feedback channel, PSFCH). D2D communication may include vehicle-to-vehicle communication, vehicle-to-pedestrian communication, vehicle-to-infrastructure communication, unmanned-aerial-vehicle (unmanned aerial vehicle, UAV)-to-unmanned-aerial-vehicle communication, and the like. This is not limited. It should be noted that in this embodiment of this application, the SL may also be referred to as a direct link, a PC5 interface link, or the like. This is not limited.

The terminal (terminal) in FIG. 1a may be referred to as user equipment (user equipment, UE), a mobile station (mobile station, MS), a mobile terminal (mobile terminal, MT), or the like. Specifically, the terminal in FIG. 1a may be a mobile phone (mobile phone), a tablet computer, or a computer having a wireless transceiver function. Alternatively, the terminal may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, a UAV having a UAV-to-UAV (UAV to UAV, U2U) communication capability, or the like. This is not limited.

The access network device in FIG. 1a may be any device having a wireless transceiver function, and is mainly configured to implement functions such as a radio physical control function, resource scheduling and radio resource management, radio access control, and mobility management. Specifically, the access network device may be an access network (access network, AN) device/a radio access network (radio access network, RAN) device, may be a device including a plurality of 5G-AN/5G-RAN nodes, or may be a NodeB (nodeB, NB), an evolved NodeB (evolved NodeB, eNB), a next generation NodeB (next generation nodeB, gNB), a transmission reception point (transmission reception point, TRP), a transmission point (transmission point, TP), a road side unit (road side unit, RSU), any other access node, or the like. This is not limited.

The core network device in FIG. 1a may include network function entities such as the access and mobility management function (Access and Mobility Management Function, AMF) network element, a session management function (Session Management function, SMF) network element, a user plane function (User Plane Function, UPF) network element, a network slice selection function (Network Slice Selection Function, NSSF) network element, a network exposure function (Network Exposure Function, NEF) network element, a network repository function (Network Repository Function, NRF) network element, a policy control function (Policy Control Function, PCF) network element, a unified data management (unified data management, UDM) network element, and an authentication server function (authentication server function, AUSF) network element. Although not shown, in addition to the network elements shown in FIG. 1a, the network shown in FIG. 1a may further include a unified data repository (unified data repository, UDR) network element, a network data analytics function (network data analytics function, NWDAF) network element, and the like. In addition, the network further includes an application function (Application Function, AF) entity. The AF entity may be a third-party application control platform, or may be a device of an operator. The AF entity may provide a service for a plurality of application servers.

The data network in FIG. 1a may include a proximity service function (proximity service function, ProSe Function) network element.

It should be noted that in embodiments of this application, the ProSe function network element may replace the policy control network element, to perform a function performed by the policy control network element in embodiments of this application.

It should be noted that the plurality of terminals, the access network device, and the core network device in embodiments of this application each may be one or more chips, or may be a system on chip (system on chip, SOC), or the like. FIG. 1a is merely an example diagram, and a quantity of devices included in FIG. 1a is not limited. In addition, the communication system may further include other devices in addition to the devices shown in FIG. 1a. Names of the devices and names of the links in FIG. 1a are not limited. In addition to the names shown in FIG. 1a, the devices and the links may have other names. For example, the terminal communicates with the access network device through a user equipment (user equipment, Uu) interface. The UL may also be named as a Uu link or the like. The terminal directly communicates with another terminal through a direct communication interface or a PC5 interface. The SL may also be named as a PC5 link, a direct link, or the like. This is not limited.

Currently, in the communication system shown in FIG. 1a, D2D communication may allow terminals to communicate with each other through a PC5 interface, and share, under control of a cell network, a physical transmission resource with a cell user to transmit different types of D2D service applications. However, different D2D service applications have different quality of service (quality of service, QoS) requirements. When D2D communication devices share a physical transmission resource to transmit different D2D service applications, because physical transmission resources in a physical transmission resource pool are limited, quality of service that can be achieved for a D2D service application is limited. This is difficult to meet QoS requirements of different D2D service applications.

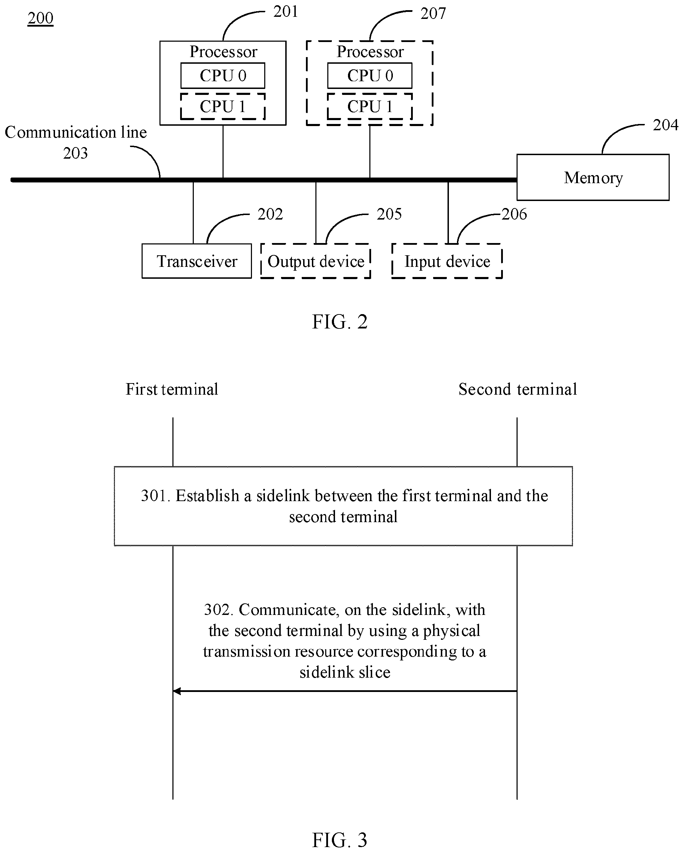

To resolve this problem, embodiments of this application provide a D2D communication method. A D2D communication network is divided into a plurality of sidelink slices, different D2D service applications correspond to different sidelink slices, and the plurality of sidelink slices correspond to physical transmission resources in a plurality of physical transmission resource pools. Therefore, a terminal can transmit, by using a physical transmission resource corresponding to a sidelink slice, data of a D2D service application corresponding to the sidelink slice on a sidelink corresponding to the sidelink slice. In this way, D2D communication between terminals is implemented based on a sidelink slice, to meet quality of service requirements of different D2D service applications. Specifically, for the implementation process, refer to descriptions in embodiments corresponding to FIG. 3 to FIG. 10 below.

It should be noted that the sidelink slice (sidelink slice) may be referred to as a sidelink network slice, is a logical network having a specific network feature, and is a key technology for meeting a network requirement of the D2D communication network proposed by the 3GPP. Different sidelink slices are logically isolated from each other, and can flexibly provide one or more network services according to a requirement of a demander. As shown in FIG. 1b, a terminal 1 and a terminal 2 may communicate with each other by using a physical transmission resource corresponding to a sidelink slice 1, and the terminal 1 and the terminal 2 may also communicate with each other by using a physical transmission resource corresponding to a sidelink slice 2; the terminal 1 and a terminal 3 may communicate with each other by using a physical transmission resource corresponding to a sidelink slice 3, and the terminal 2 and the terminal 3 may also communicate with each other by using a physical transmission resource corresponding to a sidelink slice 4.

During specific implementation, as shown in FIG. 1a, for example, each of the terminals, the access network device, and the core network device may use a composition structure shown in FIG. 2, or include components shown in FIG. 2. FIG. 2 is a schematic diagram of composition of a communication apparatus 200 according to an embodiment of this application. The communication apparatus 200 may be a terminal or a chip or a system on chip in the terminal, may be an access network device or a chip or a system on chip in the access network device, or may be a core network device or a chip or a system on chip in the core network device. As shown in FIG. 2, the communication apparatus 200 includes a processor 201, a transceiver 202, and a communication line 203.

Further, the communication apparatus 200 may include a memory 204. The processor 201, the memory 204, and the transceiver 202 may be connected to each other through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 201 may alternatively be another apparatus having a processing function, for example, a circuit, a component, or a software module. This is not limited.

The transceiver 202 is configured to communicate with another device or another communication network. The another communication network may be the Ethernet, a radio access network (radio access network, RAN), a wireless local area network (wireless local area network, WLAN), or the like. The transceiver 202 may be a module, a circuit, or any apparatus that can implement communication.

The communication line 203 is used to transmit information between components included in the communication apparatus 200.

The memory 204 is configured to store instructions. The instructions may be a computer program.

The memory 204 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, or the like), a magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located inside the communication apparatus 200, or may be located outside the communication apparatus 200. This is not limited. The processor 201 is configured to execute the instructions stored in the memory 204, to implement the D2D communication method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device, for example, a keyboard, a mouse, a microphone, or a joystick, and the output device 205 is a device, for example, a display screen or a speaker (speaker).

It should be noted that the communication apparatus 200 may be a desktop computer, a portable computer, a network server, a mobile phone, a tablet computer, a wireless terminal, an embedded device, a chip system, or a device with a structure similar to that in FIG. 2. In addition, the composition structure shown in FIG. 2 does not constitute a limitation on the communication apparatus. In addition to the components shown in FIG. 2, the communication apparatus may include more or fewer components than those shown in the figure, or have different component arrangements, or some components are combined.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

Based on the communication system shown in FIG. 1a, the following describes the D2D communication method provided in embodiments of this application by using an example in which a first terminal and a second terminal transmit data on a sidelink corresponding to a sidelink slice. The first terminal may be any terminal in FIG. 1a, and the second terminal may be any terminal that can perform SL communication with the first terminal in FIG. 1a. The first terminal and the second terminal described in the following embodiments may have the components shown in FIG. 2.

FIG. 3 is a flowchart of a D2D communication method according to an embodiment of this application. As shown in FIG. 3, the method may include the following steps.

Step 301. A first terminal establishes a sidelink between the first terminal and a second terminal.

The sidelink may correspond to a sidelink slice. In a D2D communication network, there are a plurality of sidelink slices, and different sidelink slices may meet transmission requirements of one or more different D2D service applications. For example, there are a sidelink slice 1, a sidelink slice 2, a sidelink slice 3, and a sidelink slice 4 in the D2D communication network, the sidelink slice 1 can meet a transmission requirement of a D2D service application 1, the sidelink slice 2 can also meet the transmission requirement of the D2D service application 1, the sidelink slice 3 can meet a transmission requirement of a D2D service application 2, and the sidelink slice 4 can also meet the transmission requirement of the D2D service application 2.

In an actual application process, when transmitting data of a D2D service application, the first terminal may determine a corresponding sidelink slice based on the D2D service application, establish a sidelink corresponding to the sidelink slice, and transmit current service data on the sidelink.

For example, that a first terminal establishes a sidelink between the first terminal and a second terminal may include: The first terminal obtains a correspondence between identification information of a D2D service application and identification information of a sidelink slice, determines, based on the correspondence between the identification information of the D2D service application and the identification information of the sidelink slice, a sidelink slice corresponding to a D2D service application, and establishes a sidelink corresponding to the sidelink slice.

In embodiments of this application, the identification information of the D2D service application may be used to indicate the D2D service application. The identification information may be identity information of the D2D service application or other information used to indicate the D2D service application. For example, the identification information may be an identifier of an internet of vehicles application or an identifier of an unmanned aerial vehicle communication application, and may be specifically an application identifier (application identifier, APP ID). This is not limited. The identification information of the sidelink slice may be used to indicate the sidelink slice, and the identification information may be identity information of the sidelink slice or other information used to indicate the sidelink slice. For example, the identification information may be an internet of vehicles communication slice or an unmanned aerial vehicle communication slice, and may be specifically a sidelink slice identifier (sidelink slice identifier, sidelink slice ID). This is not limited.

In the correspondence between the identification information of the D2D service application and the identification information of the sidelink slice, the identification information of the sidelink slice may include identification information of one or more sidelink slices that the first terminal has permission to use. The identification information of the one or more sidelink slices that the first terminal has the permission to use includes identification information of a sidelink slice that the first terminal subscribes to and/or identification information of a sidelink slice allowed by the first terminal. The identification information of the one or more sidelink slices that the first terminal has the permission to use may also be described as identification information of one or more sidelink slices corresponding to the first terminal.

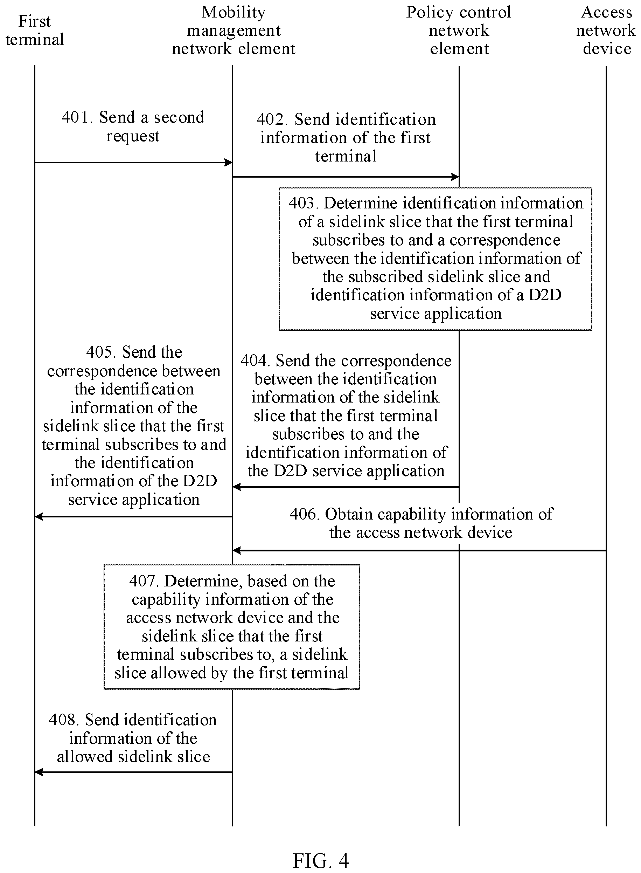

For related descriptions of the sidelink slice that the first terminal subscribes to and the sidelink slice allowed by the first terminal, and a specific process in which the first terminal obtains the correspondence between the identification information of the D2D service application and the identification information of the sidelink slice, refer to FIG. 4 below.

Optionally, to ensure that the sidelink is successfully established between the first terminal and the second terminal, before performing step 301, the first terminal further needs to determine the following condition (1) and/or condition (2). When the condition (1) and/or the condition (2) are/is met, step 301 is performed.

Condition (1): The second terminal is a terminal that supports a sidelink slice and a D2D service application corresponding to the sidelink slice.

That the second terminal supports a sidelink slice may be that the sidelink slice is in a sidelink slice that the second terminal subscribes to or is in a sidelink slice allowed by the second terminal.

For example, the first terminal may determine, in a plurality of terminals that can perform D2D communication with the first terminal, a second terminal that supports a sidelink slice and a D2D service application corresponding to the sidelink slice, to establish a sidelink corresponding to the sidelink slice between the first terminal and the second terminal.

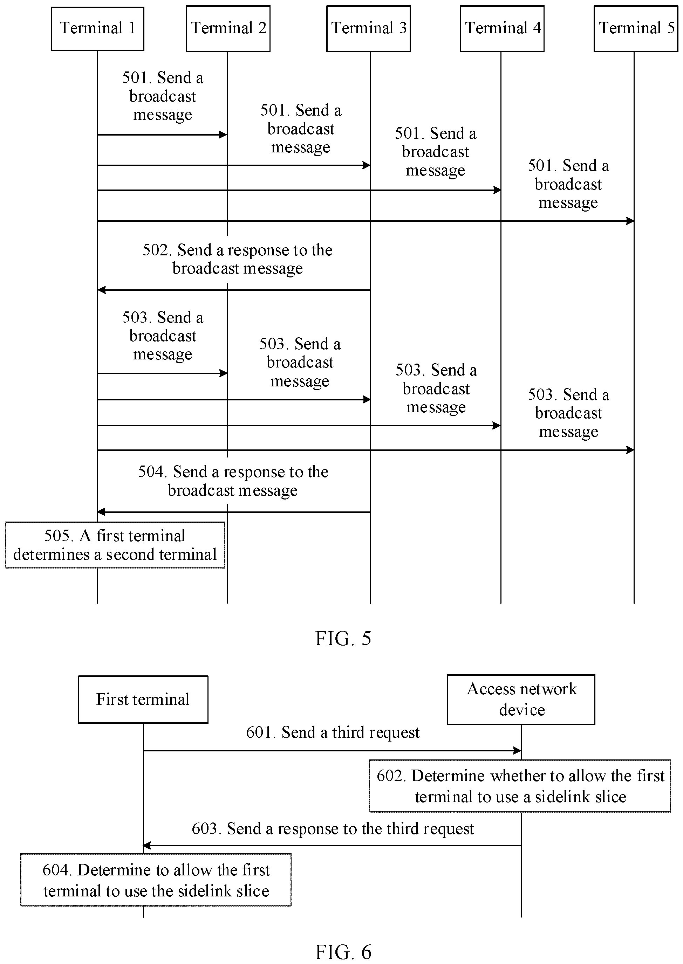

For a specific process in which the first terminal determines the second terminal in the plurality of terminals, refer to FIG. 5 below.

Condition (2): The first terminal is allowed to use a sidelink slice, or the first terminal is allowed to use a sidelink slice.

For example, the first terminal may obtain, from an access network device or a core network device, an authorization grant for allowing the first terminal to use a sidelink slice. When the access network device or the core network device allows the first terminal to use a sidelink slice, the first terminal may establish a sidelink corresponding to the sidelink slice between the first terminal and the second terminal.

For a specific process in which the access network device or the core network device determines whether to allow the first terminal to use a sidelink slice, refer to FIG. 6 below.

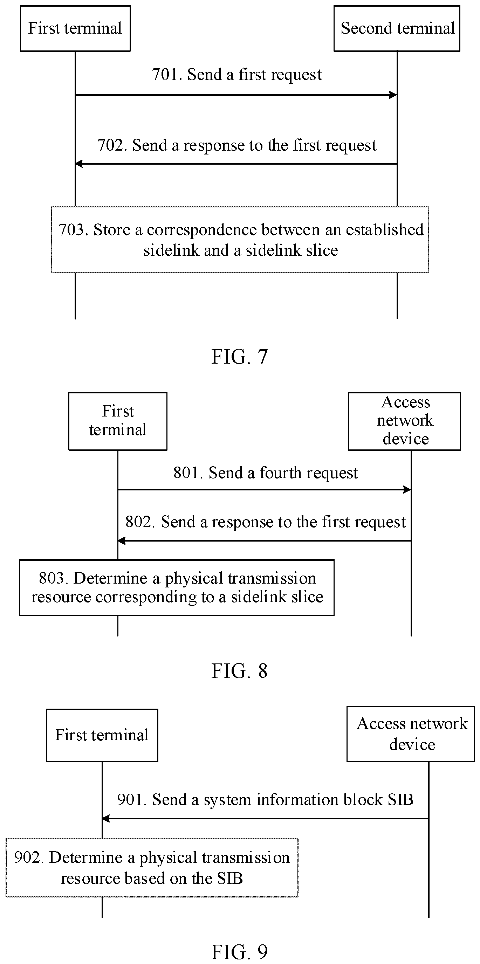

In embodiments of this application, for a specific process in which the first terminal establishes the sidelink to the second terminal, refer to FIG. 7 below.

Step 302. The first terminal communicates with the second terminal on the sidelink by using a physical transmission resource corresponding to the sidelink slice.

The physical transmission resource may include one or more of a time domain resource, a frequency domain resource, or a space domain resource. This is not limited. The physical transmission resource may be included in a physical transmission resource pool.

In embodiments of this application, a plurality of sidelink slices may correspond to a plurality of physical transmission resource pools in a network. For example, there are a sidelink slice 1, a sidelink slice 2, a sidelink slice 3, and a sidelink slice 4, and there are a physical transmission resource pool 1 and a physical transmission resource pool 2 in a D2D communication network. The sidelink slice 1 and the sidelink slice 2 may correspond to the physical transmission resource pool 1, and the sidelink slice 3 and the sidelink slice 4 may correspond to the physical transmission resource pool 2. Alternatively, the sidelink slice 1 corresponds to the physical transmission resource pool 1 and the physical transmission resource pool 2, the sidelink slice 2 corresponds to the physical transmission resource pool 1, the sidelink slice 3 corresponds to the physical transmission resource pool 2, and the sidelink slice 4 corresponds to the physical transmission resource pool 1 and the physical transmission resource pool 2. In an actual application process, a sidelink slice corresponding to a D2D service application may be mapped, according to a transmission requirement of the D2D service application, to a physical transmission resource pool that can meet the transmission requirement of the D2D service application.

Optionally, in different connection management states, the first terminal obtains, in different manners, the physical transmission resource corresponding to the sidelink slice. The different connection management states may include a plurality of states such as a connected (radio resource control connected, RRC connected) state and an idle (radio resource control idle, RRC idle) state. That the first terminal is in the RRC connected state or the RRC idle state is used as an example below to describe how the first terminal obtains the physical transmission resource corresponding to the sidelink slice.

### (1) The first terminal is in the RRC connected state.

For example, the first terminal may obtain, from the access network device, the physical transmission resource corresponding to the sidelink slice.

Specifically, the first terminal may obtain, based on a method shown in FIG. 8, the physical transmission resource corresponding to the sidelink slice.

### (2) The first terminal is in the RRC idle state.

For example, the first terminal may receive a broadcast message that is sent by the access network device and that includes a physical transmission resource pool or a physical transmission resource, and obtain, based on the broadcast message, the physical transmission resource corresponding to the sidelink slice. Specifically, for the method, refer to a method shown in FIG. 9.

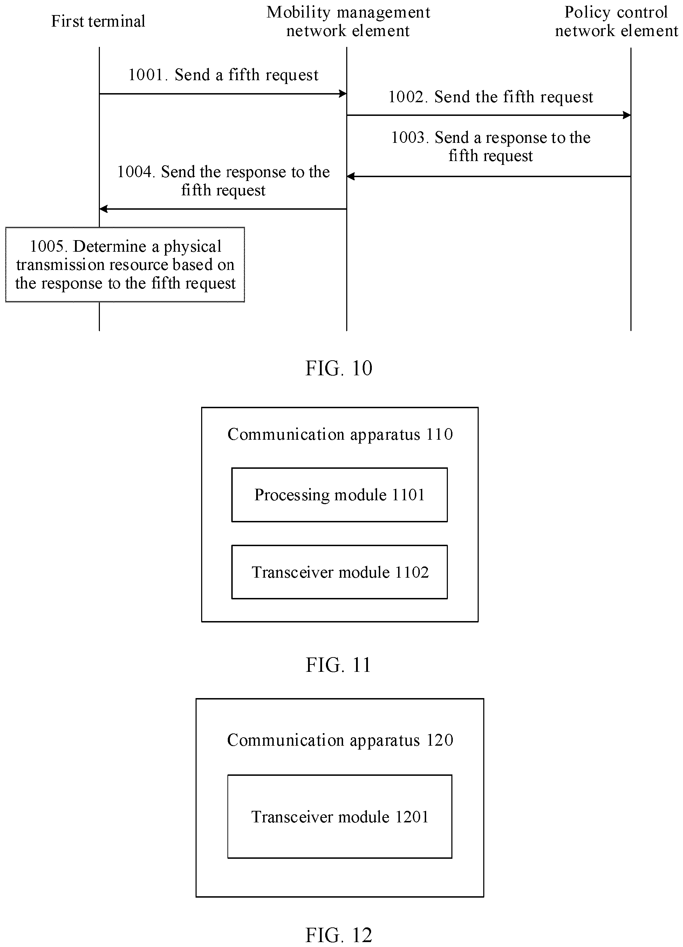

For example, the first terminal may receive a physical transmission resource pool or a physical transmission resource sent by the core network device, to obtain the physical transmission resource corresponding to the sidelink slice. Specifically, for the method, refer to a method shown in FIG. 10.

Based on the method in FIG. 3, the first terminal establishes the sidelink that is between the first terminal and the second terminal and that corresponds to the sidelink slice, and communicates with the second terminal on the sidelink by using the physical transmission resource corresponding to the sidelink slice, to implement D2D communication between the terminals based on the sidelink slice. In addition, because physical transmission resource pools corresponding to different sidelink slices may be different, transmitting data of different D2D service applications by using physical transmission resources in the different physical transmission resource pools can meet quality of service requirements of the different D2D service applications. In addition, transmitting the D2D service applications by using the physical transmission resources in the different physical transmission resource pools can improve resource utilization in the network.

In step 301, for a specific process in which the first terminal obtains the correspondence between the identification information of the D2D service application and the identification information of the sidelink slice, refer to FIG. 4. FIG. 4 shows a method for obtaining a correspondence between identification information of a D2D service application and identification information of a sidelink slice according to an embodiment of this application. As shown in FIG. 4, the method includes the following steps.

Step 401. A first terminal sends a second request to a mobility management network element.

The mobility management network element may be an AMF in a core network device.

In a possible design, the second request includes capability information of the first terminal, and the second request is used to request related information of a sidelink slice corresponding to the first terminal.

The capability information of the first terminal may be capability information indicating that the first terminal supports D2D communication, or may be capability information indicating that the first terminal supports V2X communication.

The capability information of the first terminal may be included in a policy container (Policy Container) of the first terminal.

The sidelink slice corresponding to the first terminal may include a sidelink slice that the first terminal subscribes to and/or a sidelink slice allowed by the first terminal. The related information of the sidelink slice includes identification information of the sidelink slice and/or a correspondence between the identification information of the sidelink slice and identification information of a D2D service application.

In another possible design, the second request includes identification information of a sidelink slice, and the second request is used to request to allow the first terminal to use the sidelink slice.

Optionally, the second request is further used to request related information of the sidelink slice, where the related information includes a correspondence between the identification information of the sidelink slice and identification information of a D2D service application, and/or a physical transmission resource pool or a physical transmission resource corresponding to the sidelink slice.

In another possible design, the second request includes both capability information of the first terminal and identification information of a sidelink slice.

In the foregoing three possible designs, the second request may further include identification information of the first terminal and other information. This is not limited.

Optionally, in a process of registering with a network, the first terminal may include the second request in a registration request and send the registration request to the mobility management network element, to reduce signaling exchange.

Step 402. The mobility management network element receives the second request, and sends the identification information of the first terminal to a policy control network element.

The policy control network element may be a PCF in the core network device.

Further, the mobility management network element sends the second request of the first terminal to the policy control network element.

Optionally, to reduce signaling exchange in the network, the mobility management network element may include the identification information of the first terminal and/or the second request in a policy association request in a process in which the first terminal registers with the network, and send the policy association request to the policy control network element.

In the process in which the first terminal registers with the network, related descriptions of the policy association request are consistent with those in a conventional technology. Details are not described again.

Step 403. The policy control network element receives the identification information of the first terminal, and determines, based on subscription information of the first terminal, identification information of the sidelink slice that the first terminal subscribes to and a correspondence between the identification information of the sidelink slice that the first terminal subscribes to and identification information of a D2D service application.

For example, after identifying the first terminal based on the identification information of the first terminal, the policy control network element may obtain the subscription information of the first terminal from a UDR in the core network device. The UDR stores subscription information of each terminal, and the subscription information of each terminal includes identification information of a sidelink slice that the terminal subscribes to and a correspondence between the identification information of the sidelink slice and identification information of a D2D service application.

The policy control network element determines, based on the subscription information of the first terminal, the identification information of the sidelink slice that the first terminal subscribes to and the correspondence between the identification information of the sidelink slice that the first terminal subscribes to and the identification information of the D2D service application.

Further, when the policy control network element further receives the second request of the first terminal sent by the mobility management network element, if the second request includes capability information of the first terminal, the policy control network element determines, based on the capability information of the first terminal, that the first terminal supports D2D communication or V2X communication, and determines, based on the subscription information of the first terminal, the identification information of the sidelink slice that the first terminal subscribes to and the correspondence between the identification information of the sidelink slice and the identification information of the D2D service application.

If the second request includes identification information of a sidelink slice, the policy control network element may determine whether the sidelink slice is in the sidelink slice that the first terminal subscribes to. If the sidelink slice is in the sidelink slice that the first terminal subscribes to, the policy control network element determines to allow the first terminal to use the sidelink slice; otherwise, determines not to allow the first terminal to use the sidelink slice.

Alternatively, if the second request includes identification information of a sidelink slice, the policy control network element may determine related information of the sidelink slice, where the related information of the sidelink slice includes information such as a correspondence between identification information of the sidelink slice and identification information of a D2D service application, a physical transmission resource pool corresponding to the sidelink slice, or a physical transmission resource corresponding to the sidelink slice.

Alternatively, if the second request includes identification information of a sidelink slice, the policy control network element may determine an authorization result indicating whether to allow the first terminal to use the sidelink slice, and determine related information of the sidelink slice.

If the second request includes capability information of the first terminal and identification information of a sidelink slice, the policy control network element may determine the following information based on the second request: related information of a sidelink slice that the first terminal subscribes to, an authorization result indicating whether to allow the first terminal to use the sidelink slice carried in the second request, or related information of the sidelink slice carried in the second request.

Step 404. The policy control network element sends, to the mobility management network element, the correspondence between the identification information of the sidelink slice that the first terminal subscribes to and the identification information of the D2D service application.

Optionally, the policy control network element may further send, to the mobility management network element, the identification information of the sidelink slice that the first terminal subscribes to. In other words, in step 404, the policy control network element may send, to the mobility management network element, the correspondence between the identification information of the sidelink slice that the first terminal subscribes to and the identification information of the D2D service application, or send, to the mobility management network element, the identification information of the sidelink slice that the first terminal subscribes to and the correspondence between the identification information of the sidelink slice that the first terminal subscribes to and the identification information of the D2D service application.

Further, when the policy control network element further receives the second request of the first terminal sent by the mobility management network element, if the second request includes the capability information of the first terminal, the policy control network element sends, to the mobility management network element, the correspondence between the identification information of the sidelink slice that the first terminal subscribes to and the identification information of the D2D service application; or the policy control network element sends, to the mobility management network element, the identification information of the sidelink slice that the first terminal subscribes to.

If the second request includes the identification information of the sidelink slice, optionally, the policy control network element sends the authorization result indicating whether to allow the first terminal to use the sidelink slice to the mobility management network element. Optionally, the policy control network element sends the related information of the sidelink slice to the mobility management network element. Optionally, the policy control network element sends both the authorization result indicating whether to allow the first terminal to use the sidelink slice and the related information of the sidelink slice to the mobility management network element.

If the second request includes the capability information of the first terminal and the identification information of the sidelink slice, the policy control network element may send one or more of the following information to the mobility management network element: the related information of the sidelink slice that the first terminal subscribes to, the authorization result indicating whether to allow the first terminal to use the sidelink slice carried in the second request, or the related information of the sidelink slice carried in the second request.

Optionally, the policy control network element may include, in policy information of the first terminal, the information that needs to be sent to the mobility management network element, and send the policy information to the mobility management network element, to reduce signaling exchange.

The policy information of the first terminal is a policy formulated by the policy control network element for the first terminal in the process in which the first terminal registers with the network. Related descriptions of the policy information are consistent with those in the conventional technology. Details are not described again.

Step 405. The mobility management network element receives the correspondence between the identification information of the sidelink slice that the first terminal subscribes to and the identification information of the D2D service application, and sends the correspondence between the identification information of the subscribed sidelink slice and the identification information of the D2D service application to the first terminal.

Optionally, the mobility management network element may further send, to the first terminal, the identification information of the sidelink slice that the first terminal subscribes to.

For example, when the mobility management network element receives the second request of the first terminal, if the second request includes the capability information of the first terminal, the mobility management network element sends, to the first terminal, the identification information of the sidelink slice that the first terminal subscribes to and the correspondence between the identification information of the sidelink slice that the first terminal subscribes to and the identification information of the D2D service application.

The mobility management network element may obtain the subscription information of the first terminal from the UDR, and determine, based on the subscription information of the first terminal, the identification information of the sidelink slice that the first terminal subscribes to. Alternatively, the mobility management network element may receive the identification information, sent by the policy control network element, of the sidelink slice that the first terminal subscribes to.

If the second request includes the identification information of the sidelink slice, optionally, the mobility management network element sends, to the first terminal, the authorization result that is received from the policy control network element and that indicates whether to allow the first terminal to use the sidelink slice. Optionally, the mobility management network element sends, to the first terminal, the related information of the sidelink slice that is received from the policy control network element and that is carried in the second request. Optionally, the mobility management network element sends, to the first terminal, the authorization result that is received from the policy control network element and that indicates whether to allow the first terminal to use the sidelink slice and the related information of the sidelink slice carried in the second request.

If the second request includes the capability information of the first terminal and the identification information of the sidelink slice, the mobility management network element sends one or more of the following information received from the policy control network element to the first terminal: the related information of the sidelink slice that the first terminal subscribes to, the authorization result indicating whether to allow the first terminal to use the sidelink slice carried in the second request, or the related information of the sidelink slice carried in the second request.

Optionally, the mobility management network element stores the identification information of the sidelink slice that the first terminal subscribes to as a context of the first terminal.

Optionally, the method may further include the following step 406, step 407, and step 408, so that the first terminal obtains the related information of the sidelink slice allowed by the first terminal.

Step 406. The mobility management network element obtains capability information of the access network device.

The capability information of the access network device includes identification information of a sidelink slice that can be supported by the access network device.

Optionally, the access network device may obtain the capability information of the access network device by using a next generation application protocol (next generation application protocol, NGAP) message.

Step 407. The mobility management network element determines, based on the capability information of the access network device and the identification information of the sidelink slice that the first terminal subscribes to, identification information of the sidelink slice allowed by the first terminal.

Optionally, the mobility management network element obtains an intersection set of the identification information of the sidelink slice that the first terminal subscribes to and the identification information of the sidelink slice that can be supported by the access network device, determines identification information of a sidelink slice in the intersection set as the identification information of the sidelink slice allowed by the first terminal.

For example, sidelink slices that the first terminal subscribes to include a sidelink slice 1, a sidelink slice 2, a sidelink slice 3, and a sidelink slice 4, and sidelink slices that can be supported by the access network device include the sidelink slice 1, the sidelink slice 2, the sidelink slice 4, a sidelink slice 5, and a sidelink slice 6. In this case, the mobility management network element determines that sidelink slices allowed by the first terminal are the sidelink slice 1, the sidelink slice 2, and the sidelink slice 4.

Further, the mobility management network element may determine a correspondence between the identification information of the sidelink slice allowed by the first terminal and identification information of a D2D service application based on the correspondence between the identification information of the sidelink slice that the first terminal subscribes to and the identification information of the D2D service application.

Step 408. The mobility management network element sends the identification information of the sidelink slice allowed by the first terminal to the first terminal.

Further, the mobility management network element may further send, to the first terminal, the correspondence between the identification information of the sidelink slice allowed by the first terminal and the identification information of the D2D service application.

Still further, the first terminal may store the identification information of the sidelink slice that the first terminal subscribes to, the identification information of the sidelink slice allowed by the first terminal, and the correspondence between the identification information of the sidelink slice and the identification information of the D2D service application that are sent by the mobility management network element. In this way, when transmitting data of a D2D service application, the first terminal performs transmission by using a physical transmission resource corresponding to a sidelink slice corresponding to the D2D service application.

It should be noted that step 401 to step 408 merely use an example in which the first terminal obtains the identification information of the sidelink slice that the first terminal subscribes to, the identification information of the sidelink slice allowed by the first terminal, the correspondence between the identification information of the sidelink slice that the first terminal subscribes to and the identification information of the D2D service application, and the correspondence between the identification information of the sidelink slice allowed by the first terminal and the identification information of the D2D service application. Each terminal in the network can obtain, based on step 401 to step 408, identification information of a sidelink slice that the terminal subscribes to, identification information of a sidelink slice allowed by the terminal, a correspondence between the identification information of the sidelink slice that the terminal subscribes to and identification information of a D2D service application, and a correspondence between the identification information of the sidelink slice allowed by the terminal and identification information of a D2D service application.

Optionally, in step 408, the mobility management network element may alternatively send the identification information of the sidelink slice allowed by each terminal to the access network device, and the access network device stores the identification information of the sidelink slice allowed by each terminal. In this way, when a terminal subsequently uses a sidelink slice, the access network device determines whether the sidelink slice is a sidelink slice allowed by the terminal; and if the sidelink slice is a sidelink slice allowed by the terminal, determines to allow the terminal to use the sidelink slice.

Alternatively, the mobility management network element may send, to the access network device, the identification information of the sidelink slice that each terminal subscribes to, and the access network device stores the identification information of the sidelink slice that each terminal subscribes to. In this way, when a terminal subsequently uses a sidelink slice, the access network device determines whether the sidelink slice is a sidelink slice that the terminal subscribes to; if the sidelink slice is a sidelink slice that the terminal subscribes to, determines whether the access network device supports the sidelink slice; and if the access network device supports the sidelink slice, determines to allow the terminal to use the sidelink slice.

In step 301, for a specific process in which the first terminal determines the second terminal in the plurality of terminals, refer to FIG. 5. FIG. 5 shows a communication method for finding a second terminal according to an embodiment of this application. As shown in FIG. 5, the method includes the following steps.

Step 501. A first terminal sends a broadcast message including identification information of a D2D service application.

Optionally, the broadcast message further includes identification information of the first terminal, so that a terminal supporting the D2D service application in a network determines the first terminal based on the identification information of the first terminal, and sends a response to the broadcast message to the first terminal.

For example, as shown in FIG. 5, the network includes a terminal 1, a terminal 2, a terminal 3, a terminal 4, and a terminal 5. The terminal 1 sends, in the network, a broadcast message that includes identification information of the terminal 1 and the identification information of the D2D service application.

Step 502. The terminal supporting the D2D service application sends the response to the broadcast message to the first terminal.

The response to the broadcast message is used to indicate that the terminal supports the D2D service application.

Optionally, after receiving the broadcast message sent by the first terminal, each terminal in the network determines whether the terminal supports the D2D service application; and if the terminal supports the D2D service application, identifies the first terminal based on the identification information of the first terminal in the broadcast message, and sends the response to the broadcast message to the first terminal.

Optionally, the response to the broadcast message includes identification information of the terminal that supports the D2D service application, so that the first terminal identifies, based on the identification information, the terminal that supports the D2D service application.

For example, as shown in FIG. 5, after receiving the broadcast message sent by the terminal 1, the terminal 2, the terminal 3, the terminal 4, and the terminal 5 need to determine whether the terminal 2, the terminal 3, the terminal 4, and the terminal 5 support a D2D service application. Assuming that the terminal 3 learns that the terminal 3 supports the D2D service application, the terminal 3 sends, to the terminal 1, a response, including identification information of the terminal 3, to the broadcast message, and the terminal 1 determines, based on the response to the broadcast message, that the terminal 3 supports the D2D service application.

Because there is a correspondence between a D2D service application and a sidelink slice, when determining, based on step 501 and step 502, that a terminal supports a D2D service application, the first terminal may consider by default that the terminal supports a sidelink slice corresponding to the D2D service application, and determines the terminal as a second terminal.

Alternatively, when determining, based on step 503 and step 504, that a terminal supports a sidelink slice, the first terminal may consider by default that the terminal supports a D2D service application corresponding to the sidelink slice, and determine the terminal as a second terminal.

Alternatively, the first terminal may separately determine, based on step 501, step 502, step 503, and step 504, a terminal that supports a D2D service application and a terminal that supports a sidelink slice, and determine a terminal that supports both the D2D service application and the sidelink slice as a second terminal.

Step 503. The first terminal sends a broadcast message including identification information of a sidelink slice.

The first terminal determines the identification information of the sidelink slice based on the identification information of the D2D service application and a correspondence between identification information of a sidelink slice and identification information of a D2D service application.

For example, the first terminal sends identification information of a sidelink slice corresponding to the D2D service application to another terminal in the network, so that the first terminal determines a terminal that supports the sidelink slice. If there is a terminal that supports the sidelink slice, the first terminal may establish, with the terminal, a sidelink corresponding to the sidelink slice.

Optionally, the broadcast message further includes the identification information of the first terminal, so that a terminal supporting the sidelink slice in the network determines the first terminal based on the identification information of the first terminal, and sends a response to the broadcast message to the first terminal.

Step 504. The terminal supporting the sidelink slice sends the response to the broadcast message to the first terminal.

The response to the broadcast message may be used to indicate that the terminal supports the sidelink slice.

Optionally, after receiving the broadcast message sent by the first terminal, each terminal in the network determines whether the sidelink slice is in a sidelink slice that the terminal subscribes to or is in a sidelink slice allowed by the terminal; and if the sidelink slice is in the sidelink slice that the terminal subscribes to or is in the sidelink slice allowed by the terminal, determines that the terminal supports the sidelink slice, identifies the first terminal based on the identification information of the first terminal in the broadcast message, and sends a response to the broadcast message to the first terminal.

Optionally, the response to the broadcast message includes identification information of the terminal that supports the sidelink slice, so that the first terminal identifies, based on the identification information, the terminal that supports the sidelink slice.

For example, as shown in FIG. 5, after receiving a broadcast message sent by the terminal 1, the terminal 2, the terminal 3, the terminal 4, and the terminal 5 need to determine whether the terminal 2, the terminal 3, the terminal 4, and the terminal 5 support a sidelink slice. Assuming that the terminal 3 learns that the terminal 3 supports the sidelink slice, the terminal 3 sends, to the terminal 1, a response, including the identification information of the terminal 3, to the broadcast message, and the terminal 1 determines, based on the response to the broadcast message, that the terminal 3 supports the sidelink slice.

Further, when determining, based on step 503 and step 504, that a terminal supports a sidelink slice, the first terminal may consider by default that the terminal supports a D2D service application corresponding to the sidelink slice.

Step 505. The first terminal determines the second terminal.

Optionally, when determining, based on step 501 and step 502, that a terminal supports a D2D service application, the first terminal may consider by default that the terminal supports a sidelink slice corresponding to the D2D service application, and determine the terminal as the second terminal.

Alternatively, when determining, based on step 503 and step 504, that a terminal supports a sidelink slice, the first terminal may consider by default that the terminal supports a D2D service application corresponding to the sidelink slice, and determine the terminal as the second terminal.

Alternatively, when separately determining, based on step 501, step 502, step 503, and step 504, a terminal that supports a D2D service application and a terminal that supports a sidelink slice, the first terminal may determine a terminal that supports both the D2D service application and the sidelink slice as the second terminal.

Further, when the first terminal determines the second terminal based on step 501, step 502, step 503, and step 504, in step 503, the first terminal may send the identification information of the sidelink slice to the terminal supporting the D2D service application, with no need to broadcast the identification information of the sidelink slice in the network, thereby reducing signaling exchange in the network.

For example, when the terminal 1 determines, based on the response, sent by the terminal 2 in step 502, to the broadcast message, that the terminal 2 supports the D2D service application, the terminal 1 may send the identification information of the terminal 1 and the identification information of the sidelink slice to the terminal 2.

Alternatively, the first terminal sends the broadcast message that includes the identification information of the D2D service application and the identification information of the sidelink slice corresponding to the D2D service application. In this way, after receiving the broadcast message, a terminal supporting the D2D service application and the sidelink slice sends a response to the broadcast message to the first terminal. After receiving the response to the broadcast message, the first terminal determines a terminal corresponding to the response as the second terminal.

It should be noted that, when the first terminal does not know which terminal in the network can support the D2D service application and the sidelink slice, the method described in FIG. 5 may be used to find the second terminal in the network.

Alternatively, when the first terminal determines that the second terminal can support the D2D service application and/or support the sidelink slice, but does not know which terminal in the network is the second terminal, the first terminal may include identification information of the second terminal in the broadcast message. After determining, based on the identification information of the second terminal in the broadcast message, that a terminal in the network is the second terminal, the terminal sends a response to the broadcast message to the first terminal.

In step 301, for a specific process in which the access network device or the core network device determines whether to allow the first terminal to use the sidelink slice, refer to FIG. 6. In FIG. 6, an example in which the access network device determines whether to allow the first terminal to use the sidelink slice is used. FIG. 6 shows a communication method for determining to allow a first terminal to use a sidelink slice according to an embodiment of this application. As shown in FIG. 6, the method includes the following steps.

Step 601. A first terminal sends a third request to an access network device.

The third request includes identification information of a sidelink slice, and the third request is used to indicate to request to use the sidelink slice.

Optionally, before establishing a sidelink corresponding to the sidelink slice to a second terminal, the first terminal sends the third request to the access network device. When the access network device determines to allow the first terminal to use the sidelink slice, the first terminal establishes the sidelink corresponding to the sidelink slice.

Step 602. The access network device receives the third request, and determines, based on the third request, whether to allow the first terminal to use the sidelink slice.

In a possible design, the access network device may compare a quantity of established sidelinks corresponding to the sidelink slice with a preset quantity threshold. For different sidelink slices, quantities of sidelinks that can be supported by the sidelink slices may be different. The access network device may obtain, from a network management network element, a maximum value of a quantity of sidelinks corresponding to each sidelink slice, that is, the preset quantity threshold. After receiving the third request, the access network device determines whether the quantity of established sidelinks corresponding to the sidelink slice is less than the preset quantity threshold. If the quantity is less than the preset quantity threshold, the first terminal is allowed to use the sidelink slice, that is, the first terminal is allowed to establish the sidelink corresponding to the sidelink slice.

In another possible design, if the access network device verifies that the terminal has permission to use the sidelink slice, the access network device allows the first terminal to use the sidelink slice.

Specifically, the access network device determines whether the sidelink slice in the third request is in a sidelink slice that the first terminal subscribes to. If the sidelink slice in the third request is in the sidelink slice that the first terminal subscribes to, the access network device determines whether the access network device supports the sidelink slice. If the access network device supports the sidelink slice, the access network device may allow the first terminal to use the sidelink slice.

The access network device may receive identification information, sent by a mobility management network element, of the sidelink slice that the first terminal subscribes to.

In another possible design, if the access network device supports the sidelink slice in the third request, the access network device allows the first terminal to use the sidelink slice.

Specifically, the access network device may determine whether the sidelink slice in the third request is in a sidelink slice allowed by the first terminal. If the sidelink slice in the third request is in the sidelink slice allowed by the first terminal, the access network device allows the first terminal to use the sidelink slice.

The access network device may receive identification information, sent by a mobility management network element, of the sidelink slice allowed by the first terminal.

Step 603. The access network device sends a response to the third request to the first terminal.

The response to the third request is used to indicate that the first terminal is allowed to use the sidelink slice.

When determining to allow the first terminal to use the sidelink slice, the access network device may send the response to the third request to the first terminal, to notify the first terminal that the first terminal can use the sidelink slice, so that the first terminal subsequently transmits data by using a physical transmission resource corresponding to the sidelink slice.

Optionally, when the access network device determines not to allow the first terminal to use the sidelink slice, the access network device may send, to the first terminal, a response indicating that the first terminal is not allowed to use the sidelink slice.

Step 604. The first terminal receives the response, sent by the access network device, to the third request, and determines, based on the response to the third request, that the first terminal is allowed to use the sidelink slice.

For a specific process in which the first terminal establishes the sidelink to the second terminal in step 301, refer to FIG. 7. FIG. 7 shows a method for establishing a sidelink to a second terminal by a first terminal according to an embodiment of this application. As shown in FIG. 7, the method includes the following steps.

Step 701. The first terminal sends a first request to the second terminal.

The first request includes identification information of a sidelink slice, the first request is used to request to establish a sidelink corresponding to the sidelink slice, and a layer 2 address of the first request is associated with a D2D service application. The association relationship may be preconfigured in the first terminal or may be obtained by the first terminal from a network side in a process of registering with a network. The first request may include identification information of the second terminal, so that the second terminal identifies the identification information and sends a response to the first request to the first terminal. A source layer 2 address of the first request is a source layer 2 address of the first terminal, and the first request may use default setting information of an access layer (access layer, AS layer) in a conventional technology, so that the second terminal parses the first request.

Optionally, after determining that the second terminal supports a D2D service application and a sidelink slice corresponding to the D2D service application, and determining that an access network device allows the first terminal to use the sidelink slice, the first terminal sends the first request to the second terminal.

Step 702. The second terminal receives the first request, and sends the response to the first request to the first terminal.

The second terminal identifies the identification information of the second terminal in the first request, and when determining that the sidelink slice in the first request is in a prestored subscribed sidelink slice or a prestored allowed sidelink slice, uses the source layer-2 address of the first request as a destination layer-2 address and a source layer-2 address of the second terminal as a source layer-2 address, and sends the addresses to the first terminal as the response to the first request, indicating that the sidelink is successfully established.

Step 703. The first terminal and the second terminal store a correspondence between the established sidelink and the sidelink slice.

The first terminal and the second terminal establish and store the correspondence between the established sidelink and the sidelink slice. In this way, when data of a D2D service application is to be subsequently transmitted, the data is transmitted, by using a physical transmission resource corresponding to the sidelink slice, on a sidelink corresponding to a sidelink slice corresponding to the D2D service application.

After the first terminal and the second terminal establish, by using the methods in FIG. 4, FIG. 5, FIG. 6, and FIG. 7, a sidelink corresponding to a sidelink slice, the first terminal and the second terminal may determine, based on the method in FIG. 8, FIG. 9, or FIG. 10, a physical transmission resource corresponding to the sidelink slice, so that data of a D2D service application is transmitted, by using the physical transmission resource corresponding to the sidelink slice, on the sidelink corresponding to the sidelink slice.

In embodiments of this application, the first terminal is used as an example to describe a process in which a terminal obtains a physical transmission resource corresponding to a sidelink slice.

In a possible design, when the first terminal is in network coverage and is in a connected state, the first terminal may obtain, by using the method in FIG. 8, a physical transmission resource corresponding to a sidelink slice. FIG. 8 shows a method for obtaining, by a first terminal, a physical transmission resource corresponding to a sidelink slice according to an embodiment of this application. As shown in FIG. 8, the method includes the following steps.

Step 801. The first terminal sends a fourth request to an access network device.

The fourth request includes identification information of a sidelink slice. The fourth request is used to request a physical transmission resource corresponding to the sidelink slice.

Optionally, the fourth request further includes QoS requirement information of a service application corresponding to the sidelink slice.

Step 802. The access network device receives the fourth request, and sends a response to the fourth request to the first terminal based on the fourth request.

The response to the fourth request includes a physical transmission resource that corresponds to the sidelink slice and that is allocated by the access network device to the first terminal. The physical transmission resource that corresponds to the sidelink slice and that is allocated to the first terminal is selected from a physical transmission resource pool corresponding to the identification information of the sidelink slice.

Optionally, the access network device determines, for the first terminal based on the QoS requirement information of the service application sent by the first terminal, the physical transmission resource corresponding to the sidelink slice.

Step 803. The first terminal receives the response to the fourth request, and determines, based on the response to the fourth request, the physical transmission resource corresponding to the sidelink slice.

It should be noted that the first terminal may dynamically request, from the access network device based on a D2D service application, the physical transmission resource corresponding to the sidelink slice. In other words, the first terminal may continuously schedule the physical transmission resource corresponding to the sidelink slice.

The method in FIG. 8 is as follows: The first terminal sends the fourth request message to the access network device, to request, from the access network device, the physical transmission resource corresponding to the sidelink slice.

Alternatively, the first terminal may report related information of an established sidelink to the access network device, where the related information of the sidelink includes identification information of a sidelink slice corresponding to the sidelink. After receiving the related information of the sidelink, the access network device delivers, to the first terminal based on the identification information of the sidelink slice, a physical transmission resource corresponding to the sidelink slice.

In another possible design, when the first terminal is in network coverage and is in an idle state, the first terminal may obtain, by using the method in FIG. 9, a physical transmission resource corresponding to a sidelink slice. FIG. 9 shows a method for obtaining, by a first terminal, a physical transmission resource corresponding to a sidelink slice according to an embodiment of this application. As shown in FIG. 9, the method includes the following steps.

Step 901. An access network device sends a system information block SIB.

The SIB includes a correspondence between identification information of one or more sidelink slices and a physical transmission resource pool.

Step 902. The first terminal receives the SIB, and determines a physical transmission resource based on the SIB.

The identification information of the one or more sidelink slices in the system information block SIB includes identification information of a sidelink slice corresponding to a physical transmission resource that needs to be obtained by the first terminal. The first terminal determines, based on the correspondence between the identification information of the sidelink slices and the physical transmission resource pool, a physical transmission resource pool corresponding to the sidelink slice, and determines a physical transmission resource in the physical transmission resource pool based on a transmission requirement of a D2D service application. Optionally, the first terminal may store the correspondence that is between the identification information of the sidelink slices and the physical transmission resource pool and that is sent by the access network device. When the first terminal is not in network coverage, the first terminal may determine a physical transmission resource pool based on the prestored correspondence, and determine a physical transmission resource in the physical transmission resource pool based on a transmission requirement of a D2D service application.

Alternatively, the access network device sends a broadcast message including a correspondence between identification information of a sidelink slice and a physical transmission resource, so that the first terminal determines, based on the broadcast message of the access network device, a physical transmission resource corresponding to the sidelink slice. In another possible design, when the first terminal is in network coverage, the first terminal may alternatively obtain, by using the method in FIG. 10, a physical transmission resource corresponding to a sidelink slice. FIG. 10 shows a method for obtaining, by a first terminal, a physical transmission resource corresponding to a sidelink slice according to an embodiment of this application. As shown in FIG. 10, the method includes the following steps.

Step 1001. The first terminal sends a fifth request to a mobility management network element.

The fifth request includes identification information of a sidelink slice.

Step 1002. The mobility management network element receives the fifth request, and sends the fifth request to a policy control network element based on the fifth request.

The fifth request is used to request a physical transmission resource corresponding to the sidelink slice.

Optionally, the first terminal may include the fifth request in a registration request in a process of registering with a network, to reduce signaling exchange, or may send the fifth request to the mobility management network element when the physical transmission resource corresponding to the sidelink slice needs to be used. This is not limited.

Step 1003. The policy control network element receives the fifth request, and sends a response to the fifth request to the mobility management network element based on the fifth request.

The response to the fifth request includes a correspondence between identification information of a sidelink slice and a physical transmission resource pool.

Step 1004. The mobility management network element receives the response to the fifth request, and sends the response to the fifth request to the first terminal.

Step 1005. The first terminal receives the response to the fifth request, and determines the physical transmission resource based on the response to the fifth request.

The first terminal determines, based on the correspondence between the identification information of the sidelink slices and the physical transmission resource pool, a physical transmission resource pool corresponding to the sidelink slice, and determines a physical transmission resource in the physical transmission resource pool based on a transmission requirement of a D2D service application.

Optionally, the first terminal may store the correspondence that is between the identification information of the sidelink slice and the physical transmission resource pool and that is sent by the mobility management network element. When the first terminal is not in network coverage, the first terminal may determine a physical transmission resource pool based on the prestored correspondence, and determine a physical transmission resource in the physical transmission resource pool based on a transmission requirement of a D2D service application.

Alternatively, the policy control network element may directly send a correspondence between identification information of a sidelink slice and a physical transmission resource to the first terminal via the mobility management network element, so that the first terminal determines, based on the correspondence, the physical transmission resource corresponding to the sidelink slice.

It should be noted that the correspondence between the identification information of the sidelink slice and the physical transmission resource in FIG. 8, FIG. 9, and FIG. 10 or the correspondence between the identification information of the sidelink slice and the physical transmission resource pool may be preconfigured by a network management network element and stored in the access network device or the policy control network element. In the methods in FIG. 9 and FIG. 10, for a sidelink slice, a physical transmission resource pool determined by the access network device may be the same as or different from a physical transmission resource pool determined by the policy control network element, that is the correspondence that is between the identification information of the sidelink slice and the physical transmission resource and that is sent by the access network device may be the same as or different from the correspondence that is between the identification information of the sidelink slice and the physical transmission resource and that is sent by the policy control network element.

Based on the foregoing methods, in different connection management states, the first terminal may obtain, in different manners, the physical transmission resource corresponding to the sidelink slice, so that the first terminal communicates with the second terminal on the sidelink by using the physical transmission resource corresponding to the sidelink slice, to implement D2D communication between the terminals by using the sidelink slice.

The solutions provided in embodiments of this application are mainly described above from a perspective of interaction between the devices. It may be understood that to implement the foregoing functions, the devices include hardware structures and/or software modules corresponding to the functions. A person skilled in the art should be easily aware that, in combination with the examples described in embodiments disclosed in this specification, algorithm steps may be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, a network node may be divided into function modules based on the foregoing method examples. For example, function modules corresponding to the functions may be obtained through division, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used.

When each function module is obtained through division based on each corresponding function, FIG. 11 shows a communication apparatus. The communication apparatus 110 may be a first terminal, a chip or a system on chip in the first terminal. The communication apparatus 110 may be configured to perform a function of the first terminal in the foregoing embodiments. The communication apparatus 110 shown in FIG. 11 includes a processing module 1101.

The processing module 1101 is configured to establish a sidelink between the first terminal and a second terminal, where the sidelink corresponds to a sidelink slice. The processing module 1101 is further configured to communicate with the second terminal on the sidelink by using a physical transmission resource corresponding to the sidelink slice.

For a specific implementation of the communication apparatus 110, refer to behavior functions of the first terminal in the D2D communication method in FIG. 3.

In a possible design, the communication apparatus further includes a transceiver module 1102. The transceiver module 1102 is configured to send a first request including identification information of the sidelink slice to the second terminal, where the first request is used to establish the sidelink.

In a possible design, the transceiver module 1102 is further configured to send the first request to the second terminal based on a correspondence between identification information of a D2D service application and the identification information of the sidelink slice, where the sidelink is used to transmit data of the D2D service application.

In a possible design, the transceiver module 1102 is further configured to send a second request including capability information of the first terminal to a mobility management network element, where the capability information is used to indicate that the first terminal supports D2D communication. The transceiver module 1102 is configured to receive, from the mobility management network element, a response to the second request including the correspondence between the identification information of the D2D service application and the identification information of the sidelink slice.

In a possible design, the transceiver module 1102 is further configured to send the first request to the second terminal if the first terminal determines that the second terminal supports the sidelink slice.

In a possible design, the transceiver module 1102 is further configured to send a broadcast message including the identification information of the sidelink slice; and the transceiver module 1102 is further configured to receive, from the second terminal, a response to the broadcast message, where the response is used to indicate that the second terminal supports the sidelink slice.

In a possible design, the transceiver module 1102 is further configured to send the first request to the second terminal if the first terminal determines that an access network device allows use of the sidelink slice.

In a possible design, the transceiver module 1102 is further configured to send a third request including the identification information of the sidelink slice to the access network device; and the transceiver module 1102 is further configured to receive, from the access network device, a response to the third request, where the response is used to indicate that the sidelink slice is allowed to be used.

In a possible design, the processing module 1101 is further configured to determine the physical transmission resource.

In a possible design, the transceiver module 1102 is further configured to send a fourth request including the identification information of the sidelink slice to the access network device; and the transceiver module 1102 is further configured to receive, from the access network device, a response to the fourth request, where the response includes the physical transmission resource.

In a possible design, the transceiver module 1102 is further configured to receive, from the access network device, a system information block (system information block, SIB) including a correspondence between the identification information of the sidelink slice and the physical transmission resource.

In a possible design, the transceiver module 1102 is further configured to receive, from the access network device, a system information block SIB including a correspondence between the identification information of the sidelink slice and a physical transmission resource pool; and the processing module 1101 is further configured to determine the physical transmission resource based on the physical transmission resource pool.

In a possible design, the transceiver module 1102 is further configured to send a fifth request including the identification information of the sidelink slice to the mobility management network element; the transceiver module 1102 is further configured to receive, from the mobility management network element, a response to the fifth request, where the response includes a correspondence between the identification information of the sidelink slice and a physical transmission resource pool; and the processing module 1101 is further configured to determine the physical transmission resource based on the physical transmission resource pool.

In a possible design, the transceiver module 1102 is further configured to send a fifth request including the identification information of the sidelink slice; and the transceiver module 1102 is further configured to receive, from the mobility management network element, a response to the fifth request, where the response includes the correspondence between the identification information of the sidelink slice and the physical transmission resource pool.

In another possible implementation, in FIG. 11, the processing module 1101 may be replaced with a processor, the transceiver module 1102 may be replaced with a transceiver, a function of the processing module 1101 may be integrated into the processor, and a function of the transceiver module 1102 may be integrated into the transceiver. Further, the communication apparatus 110 shown in FIG. 11 may further include a memory. When the processing module 1101 is replaced with a processor, and the transceiver module 1102 is replaced with a transceiver, the communication apparatus 110 in this embodiment of this application may be the communication apparatus shown in FIG. 2.

FIG. 12 is a diagram of a structure of a communication apparatus 120. The communication apparatus 120 may be a second terminal, or a chip or a system on chip in the second terminal. The communication apparatus 120 may be configured to perform a function of the second terminal in the foregoing embodiments. The communication apparatus 120 shown in FIG. 12 includes a transceiver module 1201.

The transceiver module 1201 is configured to receive, from a first terminal, a first request including identification information of a sidelink slice, where the first request is used to establish a sidelink between the first terminal and the second terminal, and the sidelink corresponds to the sidelink slice.

The transceiver module 1201 is configured to send a response to the first request to the first terminal, where the response is used to indicate that the sidelink is successfully established.

For a specific implementation of the communication apparatus 120, refer to behavior functions of the second terminal in the D2D communication methods in FIG. 5 and FIG. 7.

In a possible design, the transceiver module 1201 is specifically configured to send the response to the first request to the first terminal if the second terminal has permission to use the sidelink slice.

In a possible design, the transceiver module 1201 is further configured to receive, from a mobility management network element, identification information of one or more sidelink slices that the second terminal has permission to use.

In another implementation, the transceiver module 1201 in FIG. 12 may be replaced with a transceiver, and a function of the transceiver module 1201 may be integrated into the transceiver. Further, the communication apparatus 120 shown in FIG. 12 may further include a memory. When the transceiver module 1201 is replaced with a transceiver, the communication apparatus 120 in this embodiment of this application may be the communication apparatus shown in FIG. 2.

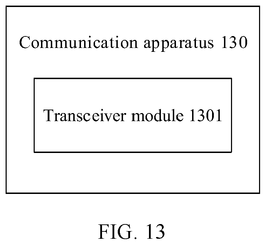

FIG. 13 shows a communication apparatus. The communication apparatus 130 may be an access network device, or a chip or a system on chip in the access network device. The communication apparatus 130 may be configured to perform a function of the access network device in the foregoing embodiments. The communication apparatus 130 shown in FIG. 13 includes a transceiver module 1301.

The transceiver module 1301 is configured to broadcast, to a terminal, a system information block SIB including a correspondence between identification information of a plurality of sidelink slices and a physical transmission resource pool.

For a specific implementation of the communication apparatus 130, refer to behavior functions of the access network device in the D2D communication methods in FIG. 4, FIG. 6, FIG. 8, and FIG. 9.

In a possible design, the transceiver module 1301 is configured to receive, a fourth request including identification information of a sidelink slice from the terminal, where the identification information of the one or more sidelink slices includes the identification information of the sidelink slice. The transceiver module 1301 is further configured to send a response to the fourth request to the terminal, where the response includes a physical transmission resource corresponding to the sidelink slice.

In a possible design, the transceiver module 1301 is further configured to receive a third request including the identification information of the sidelink slice from the terminal; and the transceiver module 1301 is further configured to send a response to the third request to the terminal, where the response is used to indicate that the sidelink slice is allowed to be used.

In a possible design, the transceiver module 1301 is specifically configured to send the response to the third request to the terminal if the access network device determines that a quantity of established sidelinks corresponding to the sidelink slice is less than a preset quantity threshold, where the preset quantity threshold is a maximum value of the quantity of sidelinks corresponding to the sidelink slice.

In a possible design, the transceiver module 1301 is specifically configured to send the response to the third request to the terminal if the access network device verifies that the terminal has permission to use the sidelink slice.

In a possible design, the transceiver module 1301 is further specifically configured to receive, from a mobility management network element, identification information of one or more sidelink slices that the terminal has permission to use.

In a possible design, the transceiver module 1301 is specifically configured to send the response to the third request to the terminal if the access network device supports the sidelink slice.

In another implementation, the transceiver module 1301 in FIG. 13 may be replaced with a transceiver, and a function of the transceiver module 1301 may be integrated into the transceiver. Further, the communication apparatus 130 shown in FIG. 13 may further include a memory. When the transceiver module 1301 is replaced with a transceiver, the communication apparatus 130 in this embodiment of this application may be the communication apparatus shown in FIG. 2.

An embodiment of this application further provides a computer-readable storage medium. All or some of the procedures in the foregoing method embodiments may be completed by a computer program instructing related hardware. The program may be stored in the computer-readable storage medium. When the program is executed, the procedures in the foregoing method embodiments may be included. The computer-readable storage medium may be an internal storage unit of the terminal (including a data transmit end and/or a data receive end) in any one of the foregoing embodiments, for example, a hard disk or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that is configured on the terminal. Further, the computer-readable storage medium may include both an internal storage unit and an external storage device of the terminal. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more, "a plurality of" means two or more, and "at least two (items)" means two, three, or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, that is, may be located in one place, or may be distributed on a plurality of different places. Some or all of the units may be selected according to actual requirements to achieve the objectives of the solutions in the embodiment.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A device-to-device D2D communication method, wherein the method comprises:
establishing (301), by a first terminal, a sidelink between the first terminal and a second terminal, wherein the sidelink corresponds to a sidelink slice; and
communicating (302), by the first terminal, with the second terminal on the sidelink by using a physical transmission resource corresponding to the sidelink slice;
wherein the establishing, by a first terminal, a sidelink between the first terminal and a second terminal comprises:
sending, by the first terminal, a first request to the second terminal, wherein the first request comprises identification information of the sidelink slice, and the first request is used to establish the sidelink;
wherein the sending, by the first terminal, a first request to the second terminal comprises:
sending, by the first terminal, the first request to the second terminal if the first terminal determines that the second terminal supports the sidelink slice,
**characterized in that** the method further comprises:
sending (501), by the first terminal, a broadcast message, wherein the broadcast message comprises the identification information of the sidelink slice; and
receiving, by the first terminal from the second terminal, a response to the broadcast message, wherein the response to the broadcast message is used to indicate that the second terminal supports the sidelink slice.

2. The method according to claim 1, wherein the sending, by the first terminal, a first request to the second terminal comprises:
sending, by the first terminal, the first request to the second terminal based on a correspondence between identification information of a D2D service application and the identification information of the sidelink slice, wherein the sidelink is used to transmit data of the D2D service application,
optionally the method further comprises:
sending (401), by the first terminal, a second request to a mobility management network element, wherein the second request comprises capability information of the first terminal, and the capability information is used to indicate that the first terminal supports D2D communication; and
receiving, by the first terminal from the mobility management network element, a response to the second request, wherein the response to the second request comprises the correspondence between the identification information of the D2D service application and the identification information of the sidelink slice.

3. The method according to claim 2, wherein the sending, by the first terminal, a first request to the second terminal comprises:
sending, by the first terminal, the first request to the second terminal if the first terminal determines that an access network device allows use of the sidelink slice,
wherein the method further comprises:
sending (601), by the first terminal, a third request to the access network device, wherein the third request comprises the identification information of the sidelink slice; and
receiving, by the first terminal from the access network device, a response to the third request, wherein the response to the third request is used to indicate that the sidelink slice is allowed to be used.

4. The method according to any one of claims 1 to 3, wherein the method further comprises:
determining (803), by the first terminal, the physical transmission resource.

5. The method according to claim 4, wherein the determining, by the first terminal, the physical transmission resource comprises:
sending (801), by the first terminal, a fourth request to the access network device, wherein the fourth request comprises the identification information of the sidelink slice; and
receiving, by the first terminal from the access network device, a response to the fourth request, wherein the response to the fourth request comprises the physical transmission resource; or,
wherein the determining, by the first terminal, the physical transmission resource comprises:
receiving, by the first terminal, a system information block SIB from the access network device, wherein the SIB comprises a correspondence between the identification information of the sidelink slice and a physical transmission resource pool; and
determining, by the first terminal, the physical transmission resource based on the physical transmission resource pool; or,
wherein the determining, by the first terminal, the physical transmission resource comprises:
sending (1001), by the first terminal, a fifth request to the mobility management network element, wherein the fifth request comprises the identification information of the sidelink slice;
receiving, by the first terminal from the mobility management network element, a response to the fifth request, wherein the response to the fifth request comprises a correspondence between the identification information of the sidelink slice and a physical transmission resource pool; and
determining, by the first terminal, the physical transmission resource based on the physical transmission resource pool.

6. A device-to-device D2D communication method, wherein the method comprises:
receiving, by a second terminal, a first request from a first terminal, wherein the first request comprises identification information of a sidelink slice, the first request is used to establish a sidelink between the first terminal and the second terminal, and the sidelink corresponds to the sidelink slice; and
sending, by the second terminal, a response to the first request to the first terminal, wherein the response to the first request is used to indicate that the sidelink is successfully established;
**characterized in that** the method further comprises:
receiving, by the second terminal from the first terminal, a broadcast message, wherein the broadcast message comprises the identification information of the sidelink slice; and
sending, by the second terminal to the first terminal, a response to the broadcast message, wherein the response to the broadcast message is used to indicate that the second terminal supports the sidelink slice.

7. The method according to claim 6, wherein the sending, by the second terminal, a response to the first request to the first terminal comprises:
sending, by the second terminal, the response to the first request to the first terminal if the second terminal has permission to use the sidelink slice and,
wherein the method further comprises:
receiving, by the second terminal from a mobility management network element, identification information of one or more sidelink slices that the second terminal has permission to use.

8. A communication apparatus (110), wherein the communication apparatus comprises one or more processors (1101) and a transceiver (1102), and **characterized in that** the one or more processors and the transceiver support the communication apparatus in performing the device-to-device D2D communication method according to any one of claims 1 to 5.

9. A communication apparatus (120), wherein the communication apparatus comprises one or more processors and a transceiver (1201), and **characterized in that** the one or more processors and the transceiver support the communication apparatus in performing the device-to-device D2D communication method according to any one of claims 6 to 7.

10. A computer-readable storage medium, wherein the computer-readable storage medium stores computer instructions or a program; and when the computer instructions or the program are/is run on a computer, **characterized in that** the computer is enabled to perform the device-to-device D2D communication method according to any one of claims 1 to 5 or any one of claims 6 to 7.

## Patentansprüche

1. Vorrichtung-an-Vorrichtung-Kommunikationsverfahren, D2D-Kommunikationsverfahren, wobei das Verfahren umfasst:
Herstellen (301), durch ein erstes Endgerät, eines Sidelinks zwischen dem ersten Endgerät und einem zweiten Endgerät, wobei der Sidelink einem Sidelink-Slice entspricht; und
Kommunizieren (302), durch das erste Endgerät mit dem zweiten Endgerät auf dem Sidelink, durch Verwenden einer physischen Übertragungsressource, die dem Sidelink-Slice entspricht;
wobei das Herstellen, durch ein erstes Endgerät, eines Sidelinks zwischen dem ersten Endgerät und einem zweiten Endgerät umfasst:
Senden, durch das erste Endgerät, einer ersten Anforderung an das zweite Endgerät, wobei die erste Anforderung Identifikationsinformationen des Sidelink-Slice umfasst, und die erste Anforderung verwendet wird, um den Sidelink herzustellen;
wobei das Senden, durch das erste Endgerät, einer ersten Anforderung an das zweite Endgerät umfasst:
Senden, durch das erste Endgerät, der ersten Anforderung an das zweite Endgerät, falls das erste Endgerät bestimmt, dass das zweite Endgerät das Sidelink-Slice unterstützt,
**dadurch gekennzeichnet, dass** das Verfahren ferner umfasst:
Senden (501), durch das erste Endgerät, einer Broadcast-Nachricht, wobei die Broadcast-Nachricht die Identifikationsinformationen des Sidelink-Slice umfasst; und
Empfangen, durch das erste Endgerät von dem zweiten Endgerät, einer Antwort auf die Broadcast-Nachricht, wobei die Antwort auf die Broadcast-Nachricht verwendet wird, um anzugeben, dass das zweite Endgerät das Sidelink-Slice unterstützt.

2. Verfahren nach Anspruch 1, wobei das Senden, durch das erste Endgerät, einer ersten Anforderung an das zweite Endgerät umfasst:
Senden, durch das erste Endgerät, der ersten Anforderung an das zweite Endgerät basierend auf einer Entsprechung zwischen Identifikationsinformationen einer D2D-Dienstanwendung und den Identifikationsinformationen des Sidelink-Slice, wobei der Sidelink verwendet wird, um Daten der D2D-Dienstanwendung zu übertragen,
optional wobei das Verfahren ferner umfasst:
Senden (401), durch das erste Endgerät, einer zweiten Anforderung an ein Mobilitätsverwaltungsnetzwerkelement, wobei die zweite Anforderung Fähigkeitsinformationen des ersten Endgeräts umfasst, und die Fähigkeitsinformationen verwendet werden, um anzugeben, dass das erste Endgerät die D2D-Kommunikation unterstützt; und
Empfangen, durch das erste Endgerät von dem Mobilitätsverwaltungsnetzwerkelement, einer Antwort auf die zweite Anforderung, wobei die Antwort auf die zweite Anforderung die Entsprechung zwischen den Identifikationsinformationen der D2D-Dienstanwendung und den Identifikationsinformationen des Sidelink-Slice umfasst.

3. Verfahren nach Anspruch 2, wobei das Senden, durch das erste Endgerät, einer ersten Anforderung an das zweite Endgerät umfasst:
Senden, durch das erste Endgerät, der ersten Anforderung an das zweite Endgerät, falls das erste Endgerät bestimmt, dass eine Zugangsnetzwerkvorrichtung die Verwendung des Sidelink-Slice zulässt,
wobei das Verfahren ferner umfasst:
Senden (601), durch das erste Endgerät, einer dritten Anforderung an die Zugangsnetzwerkvorrichtung, wobei die dritte Anforderung die Identifikationsinformationen des Sidelink-Slice umfasst; und
Empfangen, durch das erste Endgerät von der Zugangsnetzwerkvorrichtung, einer Antwort auf die dritte Anforderung, wobei die Antwort auf die dritte Anforderung verwendet wird, um anzugeben, dass das Sidelink-Slice verwendet werden darf.

4. Verfahren nach einem der Ansprüche 1 bis 3, wobei das Verfahren ferner umfasst:
Bestimmen (803), durch das erste Endgerät, der physischen Übertragungsressource.

5. Verfahren nach Anspruch 4, wobei das Bestimmen, durch das erste Endgerät, der physischen Übertragungsressource umfasst:
Senden (801), durch das erste Endgerät, einer vierten Anforderung an die Zugangsnetzwerkvorrichtung, wobei die vierte Anforderung die Identifikationsinformationen des Sidelink-Slice umfasst; und
Empfangen, durch das erste Endgerät von der Zugangsnetzwerkvorrichtung, einer Antwort auf die vierte Anforderung, wobei die Antwort auf die vierte Anforderung die physische Übertragungsressource umfasst; oder,
wobei das Bestimmen, durch das erste Endgerät, der physischen Übertragungsressource umfasst:
Empfangen, durch das erste Endgerät, eines Systeminformationsblocks SIB von der Zugangsnetzwerkvorrichtung, wobei der SIB eine Entsprechung zwischen den Identifikationsinformationen des Sidelink-Slice und einem physischen Übertragungsressourcenpool umfasst; und
Bestimmen, durch das erste Endgerät, der physischen Übertragungsressource basierend auf dem physischen Übertragungsressourcenpool; oder,
wobei das Bestimmen, durch das erste Endgerät, der physischen Übertragungsressource umfasst:
Senden (1001), durch das erste Endgerät, einer fünften Anforderung an das Mobilitätsverwaltungsnetzwerkelement, wobei die fünfte Anforderung die Identifikationsinformationen des Sidelink-Slice umfasst;
Empfangen, durch das erste Endgerät von dem Mobilitätsverwaltungsnetzwerkelement, einer Antwort auf die fünfte Anforderung, wobei die Antwort auf die fünfte Anforderung eine Entsprechung zwischen den Identifikationsinformationen des Sidelink-Slice und einem physischen Übertragungsressourcenpool umfasst; und
Bestimmen, durch das erste Endgerät, der physischen Übertragungsressource basierend auf dem physischen Übertragungsressourcenpool.

6. Vorrichtung-an-Vorrichtung-Kommunikationsverfahren, D2D-Kommunikationsverfahren, wobei das Verfahren umfasst:
Empfangen, durch ein zweites Endgerät, einer ersten Anforderung von einem ersten Endgerät, wobei die erste Anforderung Identifikationsinformationen eines Sidelink-Slice umfasst, wobei die erste Anforderung verwendet wird, um einen Sidelink zwischen dem ersten Endgerät und dem zweiten Endgerät herzustellen, und der Sidelink dem Sidelink-Slice entspricht; und
Senden, durch das zweite Endgerät, einer Antwort auf die erste Anforderung an das erste Endgerät, wobei die Antwort auf die erste Anforderung verwendet wird, um anzugeben, dass der Sidelink erfolgreich hergestellt wurde;
**dadurch gekennzeichnet, dass** das Verfahren ferner umfasst:
Empfangen, durch das zweite Endgerät von dem ersten Endgerät, einer Broadcast-Nachricht, wobei die Broadcast-Nachricht die Identifikationsinformationen des Sidelink-Slice umfasst; und
Senden, durch das zweite Endgerät an das erste Endgerät, einer Antwort auf die Broadcast-Nachricht, wobei die Antwort auf die Broadcast-Nachricht verwendet wird, um anzugeben, dass das zweite Endgerät das Sidelink-Slice unterstützt.

7. Verfahren nach Anspruch 6, wobei das Senden, durch das zweite Endgerät, einer Antwort auf die erste Anforderung an das erste Endgerät umfasst:
Senden, durch das zweite Endgerät, der Antwort auf die erste Anforderung an das erste Endgerät, falls das zweite Endgerät die Berechtigung hat, das Sidelink-Slice zu verwenden, und,
wobei das Verfahren ferner umfasst:
Empfangen, durch das zweite Endgerät, von einem Mobilitätsverwaltungsnetzwerkelement, von Identifikationsinformationen eines oder mehrerer Sidelink-Slices, für die das zweite Endgerät die Berechtigung zur Verwendung hat.

8. Kommunikationseinrichtung (110), wobei die Kommunikationseinrichtung einen oder mehrere Prozessoren (1101) und einen Transceiver (1102) umfasst, und **dadurch gekennzeichnet, dass** der eine oder die mehreren Prozessoren und der Transceiver die Kommunikationseinrichtung beim Durchführen des Vorrichtung-an-Vorrichtung-Kommunikationsverfahrens, D2D-Kommunikationsverfahren, nach einem der Ansprüche 1 bis 5 unterstützen.

9. Kommunikationseinrichtung (120), wobei die Kommunikationseinrichtung einen oder mehrere Prozessoren und einen Transceiver (1201) umfasst, und **dadurch gekennzeichnet, dass** der eine oder die mehreren Prozessoren und der Transceiver die Kommunikationseinrichtung beim Durchführen des Vorrichtung-an-Vorrichtung-Kommunikationsverfahrens, D2D-Kommunikationsverfahren, nach einem der Ansprüche 6 bis 7 unterstützen.

10. Computerlesbares Speichermedium, wobei das computerlesbare Speichermedium Computeranweisungen oder ein Programm speichert; und wenn die Computeranweisungen oder das Programm auf einem Computer ausgeführt werden/wird, **dadurch gekennzeichnet, dass** der Computer aktiviert ist, das Vorrichtung-an-Vorrichtung-Kommunikationsverfahren, D2D-Kommunikationsverfahren, nach einem der Ansprüche 1 bis 5 oder einem der Ansprüche 6 bis 7 durchzuführen.

## Revendications

1. Procédé de communication de dispositif à dispositif D2D, dans lequel le procédé comprend :
l'établissement (301), par un premier terminal, d'une liaison latérale entre le premier terminal et un second terminal, dans lequel la liaison latérale correspond à une tranche de liaison latérale ; et
la communication (302), par le premier terminal, avec le second terminal sur la liaison latérale en utilisant une ressource de transmission physique correspondant à la tranche de liaison latérale ;
dans lequel l'établissement, par un premier terminal, d'une liaison latérale entre le premier terminal et un second terminal comprend :
l'envoi, par le premier terminal, d'une première demande au second terminal, dans lequel la première demande comprend des informations d'identification de la tranche de liaison latérale, et la première demande est utilisée pour établir la liaison latérale ;
dans lequel l'envoi, par le premier terminal, d'une première demande au second terminal comprend :
l'envoi, par le premier terminal, de la première demande au second terminal si le premier terminal détermine que le second terminal prend en charge la tranche de liaison latérale,
**caractérisé en ce que** le procédé comprend en outre :
l'envoi (501), par le premier terminal, d'un message de diffusion, dans lequel le message de diffusion comprend les informations d'identification de la tranche de liaison latérale ; et
la réception, par le premier terminal depuis le second terminal, d'une réponse au message de diffusion, dans lequel la réponse au message de diffusion est utilisée pour indiquer que le second terminal prend en charge la tranche de liaison latérale.

2. Procédé selon la revendication 1, dans lequel l'envoi, par le premier terminal, d'une première demande au second terminal comprend :
l'envoi, par le premier terminal, de la première demande au second terminal sur la base d'une correspondance entre les informations d'identification d'une application de service D2D et les informations d'identification de la tranche de liaison latérale, dans lequel la liaison latérale est utilisée pour transmettre des données de l'application de service D2D,
éventuellement le procédé comprend en outre :
l'envoi (401), par le premier terminal, d'une deuxième demande à un élément de réseau de gestion de mobilité, dans lequel la deuxième demande comprend des informations de capacité du premier terminal, et les informations de capacité sont utilisées pour indiquer que le premier terminal prend en charge la communication D2D ; et
la réception, par le premier terminal depuis l'élément de réseau de gestion de mobilité, d'une réponse à la deuxième demande, dans lequel la réponse à la deuxième demande comprend la correspondance entre les informations d'identification de l'application de service D2D et les informations d'identification de la tranche de liaison latérale.

3. Procédé selon la revendication 2, dans lequel l'envoi, par le premier terminal, d'une première demande au second terminal comprend :
l'envoi, par le premier terminal, de la première demande au second terminal si le premier terminal détermine qu'un dispositif de réseau d'accès permet l'utilisation de la tranche de liaison latérale,
dans lequel le procédé comprend en outre :
l'envoi (601), par le premier terminal, d'une troisième demande au dispositif de réseau d'accès, dans lequel la troisième demande comprend les informations d'identification de la tranche de liaison latérale ; et
la réception, par le premier terminal depuis le dispositif de réseau d'accès, d'une réponse à la troisième demande, dans lequel la réponse à la troisième demande est utilisée pour indiquer que la tranche de liaison latérale est autorisée à être utilisée.

4. Procédé selon l'une quelconque des revendications 1 à 3, dans lequel le procédé comprend en outre :
la détermination (803), par le premier terminal, de la ressource de transmission physique.

5. Procédé selon la revendication 4, dans lequel la détermination, par le premier terminal, de la ressource de transmission physique comprend :
l'envoi (801), par le premier terminal, d'une quatrième demande au dispositif de réseau d'accès, dans lequel la quatrième demande comprend les informations d'identification de la tranche de liaison latérale ; et
la réception, par le premier terminal depuis le dispositif de réseau d'accès, d'une réponse à la quatrième demande, dans lequel la réponse à la quatrième demande comprend la ressource de transmission physique ; ou,
dans lequel la détermination, par le premier terminal, de la ressource de transmission physique comprend :
la réception, par le premier terminal, d'un bloc d'informations système SIB depuis le dispositif de réseau d'accès, dans lequel le SIB comprend une correspondance entre les informations d'identification de la tranche de liaison latérale et une réserve de ressources de transmission physique ; et
la détermination, par le premier terminal, de la ressource de transmission physique sur la base de la réserve de ressources de transmission physique ; ou,
dans lequel la détermination, par le premier terminal, de la ressource de transmission physique comprend :
l'envoi (1001), par le premier terminal, d'une cinquième demande à l'élément de réseau de gestion de mobilité, dans lequel la cinquième demande comprend les informations d'identification de la tranche de liaison latérale ;
la réception, par le premier terminal depuis l'élément de réseau de gestion de mobilité, d'une réponse à la cinquième demande, dans lequel la réponse à la cinquième demande comprend une correspondance entre les informations d'identification de la tranche de liaison latérale et une réserve de ressources de transmission physique ; et
la détermination, par le premier terminal, de la ressource de transmission physique sur la base de la réserve de ressources de transmission physique.

6. Procédé de communication de dispositif à dispositif D2D, dans lequel le procédé comprend :
la réception, par un second terminal, d'une première demande depuis un premier terminal, dans lequel la première demande comprend des informations d'identification d'une tranche de liaison latérale, la première demande est utilisée pour établir une liaison latérale entre le premier terminal et le second terminal, et la liaison latérale correspond à la tranche de liaison latérale ; et
l'envoi, par le second terminal, d'une réponse à la première demande au premier terminal, dans lequel la réponse à la première demande est utilisée pour indiquer que la liaison latérale est établie avec succès ;
**caractérisé en ce que** le procédé comprend en outre :
la réception, par le second terminal depuis le premier terminal, d'un message de diffusion, dans lequel le message de diffusion comprend les informations d'identification de la tranche de liaison latérale ; et
l'envoi, par le second terminal au premier terminal, d'une réponse au message de diffusion, dans lequel la réponse au message de diffusion est utilisée pour indiquer que le second terminal prend en charge la tranche de liaison latérale.

7. Procédé selon la revendication 6, dans lequel l'envoi, par le second terminal, d'une réponse à la première demande au premier terminal comprend :
l'envoi, par le second terminal, de la réponse à la première demande au premier terminal si le second terminal a l'autorisation d'utiliser la tranche de liaison latérale et,
dans lequel le procédé comprend en outre :
la réception, par le second terminal depuis un élément de réseau de gestion de mobilité, d'informations d'identification d'une ou de plusieurs tranches de liaison latérale que le second terminal est autorisé à utiliser.

8. Appareil de communication (110), dans lequel l'appareil de communication comprend un ou plusieurs processeurs (1101) et un émetteur-récepteur (1102), et **caractérisé en ce que** le ou les processeurs et l'émetteur-récepteur prennent en charge l'appareil de communication dans l'exécution du procédé de communication de dispositif à dispositif D2D selon l'une quelconque des revendications 1 à 5.

9. Appareil de communication (120), dans lequel l'appareil de communication comprend un ou plusieurs processeurs et un émetteur-récepteur (1201), et **caractérisé en ce que** le ou les processeurs et l'émetteur-récepteur prennent en charge l'appareil de communication dans l'exécution du procédé de communication de dispositif à dispositif D2D selon l'une quelconque des revendications 6 à 7.

10. Support de stockage lisible par ordinateur, dans lequel le support de stockage lisible par ordinateur stocke des instructions ou un programme informatiques ; et lorsque les instructions ou le programme informatiques sont/est exécuté(s) sur un ordinateur, **caractérisé en ce que** l'ordinateur est activé pour réaliser le procédé de communication de dispositif à dispositif D2D selon l'une quelconque des revendications 1 à 5 ou l'une quelconque des revendications 6 à 7.
